# EUROPÄISCHE PATENTSCHRIFT

(11) **EP 1 651 470 B1**
(45) Veröffentlichungstag und Bekanntmachung des Hinweises auf die Patenterteilung: **03.01.2007**
(21) Anmeldenummer: 04740192.2
(22) Anmeldetag: 23.06.2004
(51) Int. Cl.: B60R 13/02, B62D 25/24

(54) **ABDECKKAPPE**
CLOSURE CAP
GARNITURE DE RECOUVREMENT

(30) Priorität: 24.07.2003 DE 10333578
(43) Veröffentlichungstag der Anmeldung: 03.05.2006
(73) Patentinhaber: A. Raymond & Cie, 38028 Grenoble (FR)
(72) Erfinder: KURTH, Martin, 79576 Weil am Rhein-Ötlingen (DE); BÜGNER, Eric, 79256 Buchenbach (DE)
(74) Vertreter: Rüttgers, Joachim
(86) Internationale Anmeldenummer: PCT/EP2004/006767
(87) Internationale Veröffentlichungsnummer: WO 2005/018998

(56) Entgegenhaltungen:
- EP-A- 0 631 923
- US-A- 3 851 794

## Beschreibung

Die Erfindung betrifft eine Abdeckkappe gemäß dem Oberbegriff des Patentanspruches 1.

Eine derartige Abdeckkappe ist aus US-A-3,851,794 bekannt. Bei der vorbekannten Abdeckkappe zum Verschließen einer Öffnung in einem Basisteil ist ein außenseitiger Randsteg vorhanden, der in die Öffnung einfügbar ist, und ein Schirmabschnitt ausgebildet, der über den Randsteg übersteht. Weiterhin ist ein Schmelzkleber vorgesehen, der im Bereich des Schirmabschnittes angeordnet ist und sich bei Erwärmen oberhalb einer Erweichungstemperatur plastisch verformt. An dem Randsteg ist eine Widerlagerandordnung ausgebildet, die bei Einfügen der Abdeckkappe in die Öffnung das Basisteil hintergreift, wobei zwischen dem Randsteg und dem Schirmabschnitt ein Gelenkbereich mit einer gegenüber dem Schirmabschnitt verringerten Biegesteifigkeit ausgebildet ist. Der Abstand zwischen hintergreifenden Kontaktbereichen der Widerlageranordnung und der dem Randsteg zugewandten Unterseite des Schmelzklebers ist kleiner als die Dicke des Basisteiles im Randbereich der Öffnung, so dass sich bei Einfügen der Abdeckkappe in die Öffnung in dem Gelenkbereich eine Vorspannung aufbaut.

Aus der Praxis sind weiterhin Abdeckkappen bekannt, die mit einem außenseitigen Randsteg ausgebildet sind, der in eine in einem Basisteil ausgebildete Öffnung einfügbar ist. Weiterhin ist bei diesen Abdeckkappen ein Schirmabschnitt vorhanden, der über den Randsteg übersteht. Dabei ist zwischen dem Randsteg und dem Schirmabschnitt ein oberhalb einer Erweichungstemperatur plastisch verformbarer Schmelzkleber angeordnet, um nach Erwärmen des Schmelzklebers mindestens auf die Erweichungstemperatur und schwerkraftbedingten Absinken beziehungsweise Andrücken der Abdeckkappe die beispielsweise in einem Karosserieblech als Basisteil ausgebildete Öffnung gasdicht und geräuschreduzierend zu verschließen. Nachteilig bei diesen vorbekannten Abdeckkappen ist jedoch die verhältnismäßig geringe Prozesssicherheit bei dem schwerkraftbedingten Absinken beziehungsweise das Erfordernis von manuellen Eingriffen zum Andrücken.

Der Erfindung liegt die Aufgabe zugrunde, eine Abdeckkappe der eingangs genannten Art anzugeben, die sich durch eine verbesserte Verbindung zwischen dem Schirmabschnitt und dem Schmelzkleber auszeichnet.

Diese Aufgabe wird bei einer Abdeckkappe der eingangs genannten Art erfindungsgemäß mit den kennzeichnenden Merkmalen des Patentanspruches 1 gelöst.

Dadurch, dass bei der erfindungsgemäßen Abdeckkappe der Schmelzkleber in einen nutartigen, in Richtung des Außenrandes des Schirmabschnittes geöffneten Übergangsabschnitt eingebracht ist, wird die Bindekraft des Schmelzklebers mechanisch durch die Form des Übergangsabschnittes verstärkt.

Bei einer zweckmäßigen, fertigungstechnisch verhältnismäßig einfach auszuführenden Weiterbildung weist der Gelenkbereich einen Nutabschnitt auf, dessen Materialstärke gegenüber angrenzenden innenseitigen Bereichen verringert ist. Dabei ist vorteilhafterweise zum Vermeiden eines materialaufwendigen Verfüllens der Nutabschnitt von dem Randsteg wegweisend geöffnet.

In einer Ausgestaltung weist vorteilhafterweise die Widerlageranordnung quer zu dem Randsteg bewegbare und mit dem Randsteg verbundene Rastnasen auf. Diese Ausgestaltung eignet sich besonders gut für das Verschließen von Öffnungen mit im Randbereich im wesentlichen gleichen Materialstärken.

Bei einer weiteren Ausgestaltung verfügt die Widerlageranordnung über eine Anzahl von an dem Randsteg ausgebildeten sägezahnartigen Vorsprünge. Diese Ausgestaltung eignet sich besonders gut für das Verschließen von Öffnungen mit im Randbereich unterschiedlichen Materialstärken.

Weitere zweckmäßige Ausgestaltungen und Vorteile der Erfindung ergeben sich aus der nachfolgenden Beschreibung eines Ausführungsbeispiels unter Bezug auf die Figuren der Zeichnung. Es zeigen:
- Fig. 1: in einer perspektivischen Ansicht von oben ein Ausführungsbeispiel einer erfindungsgemäßen Abdeckkappe mit einem von einem Randsteg wegweisend geöffneten Nutabschnitt und mit einem außenseitig über den Randsteg vorstehenden Schirmabschnitt,
- Fig. 2: in einer perspektivischen Ansicht von unten die Abdeckkappe gemäß Fig. 1 mit an dem Randsteg ausgebildeten beweglichen Widerlagerelementen,
- Fig. 3: das Ausführungsbeispiel gemäß Fig. 1 und Fig. 2 in einem Schnitt durch den Randsteg und den Schirmabschnitt im Bereich eines Widerlagerelementes mit einem im Bereich des Schirmabschnittes aufgebrachten Schmelzkleber,
- Fig. 4: die Abdeckkappe gemäß Fig. 1 bis Fig. 3 in einer Fig. 3 entsprechenden Darstellung nach Einfügen in eine zu verschließende Öffnung vor Erwärmen des Schmelzklebers und
- Fig. 5: die Abdeckkappe gemäß Fig. 1 bis Fig. 4 in einer Fig. 4 entsprechenden Darstellung nach Erwärmen des Schmelzklebers.

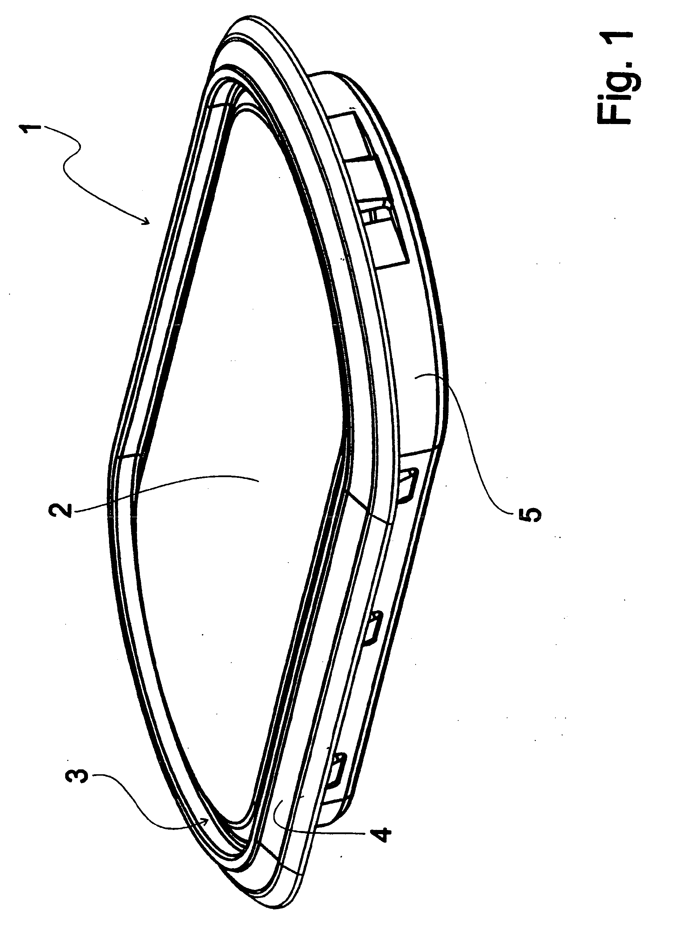

Fig. 1 zeigt in einer perspektivischen Ansicht von oben ein Ausführungsbeispiel einer erfindungsgemäßen Abdeckkappe 1. Die Abdeckkappe 1 dient zum Verschließen einer Öffnung in einem Basisteil, das beispielsweise als Karosserieblech eines Kraftfahrzeuges ausgebildet ist. Die Abdeckkappe 1 weist einen abgeflachten, verhältnismäßig großflächigen Abdeckabschnitt 2 auf, an die sich zum Ausbilden eines Gelenkbereiches randseitig ein umlaufender Nutabschnitt 3 anschließt. Weiterhin ist die Abdeckkappe 1 mit einem Schirmabschnitt 4 ausgebildet, der sich außenseitig von dem Nutabschnitt 3 fortsetzt und den Außenrand der Abdeckkappe 1 bildet.

Im Übergangsbereich zwischen dem Abdeckabschnitt 2, dem Nutabschnitt 3 und dem Schirmabschnitt 4 weist die Abdeckkappe 1 einen von dem Abdeckabschnitt 2 wegweisenden, umlaufenden Randsteg 5 auf, der bei bestimmungsgemäßer, an den Umfang der zu verschließenden Öffnung angepaßter Dimensionierung der Abdeckkappe 1 in die Öffnung einfügbar ist.

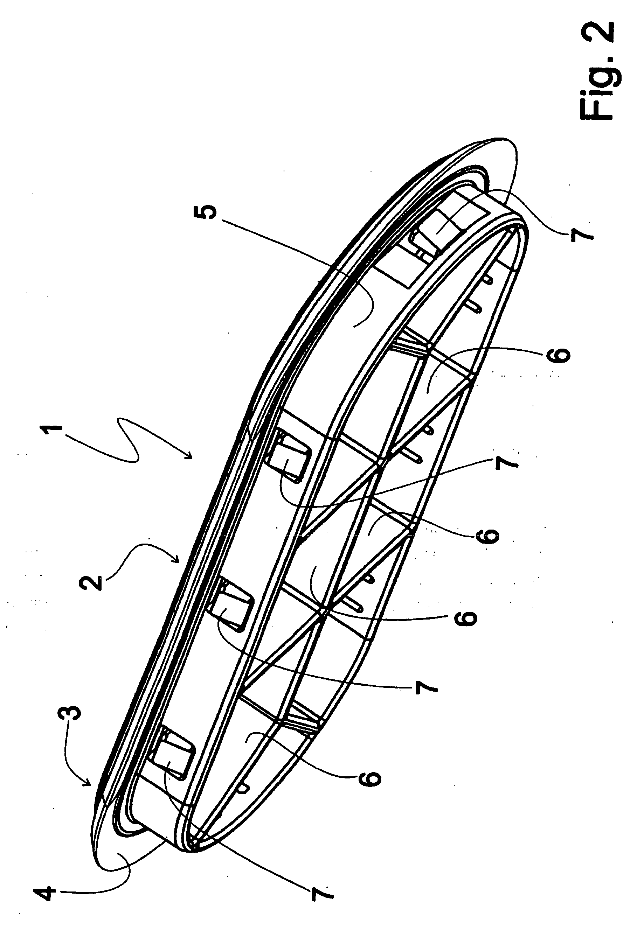

Fig. 2 zeigt in einer perspektivischen Ansicht von unten die Abdeckkappe 1 gemäß Fig. 1. Aus der Darstellung gemäß Fig. 2 ist ersichtlich, dass zwischen dem umlaufenden Randsteg 5 eine Anzahl von Versteifungsrippen 6 ausgebildet sind, die der Abdeckkappe 1 insbesondere im Bereich des Abdeckabschnittes 2 eine verhältnismäßig hohe Steifigkeit verleihen. Weiterhin ist in Fig. 2 besonders deutlich zu erkennen, dass an dem Randsteg 5 über dessen Umfang eine Anzahl von Widerlagerelementen 7 ausgebildet ist.

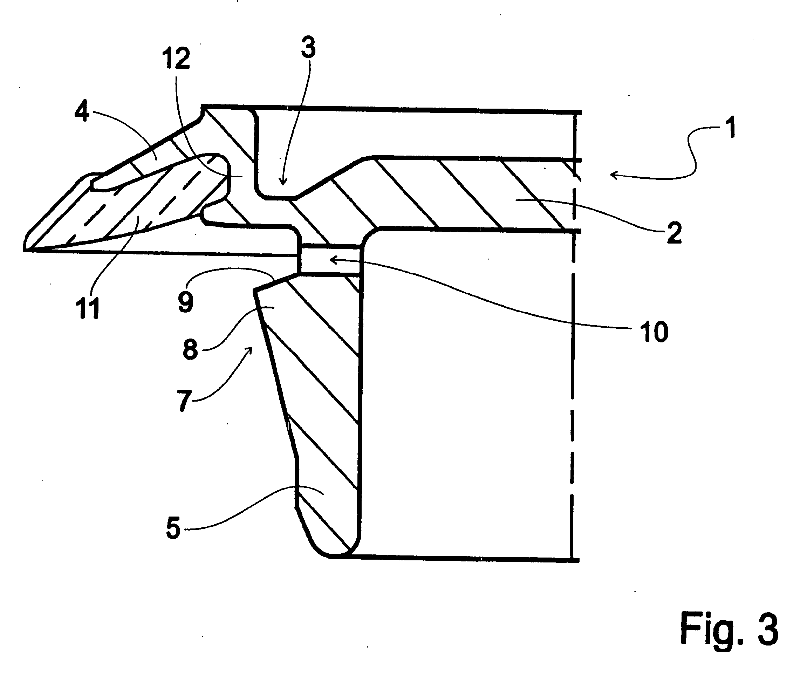

Fig. 3 zeigt die Abdeckkappe 1 gemäß Fig. 1 und Fig. 2 in einem Schnitt durch den Randsteg 5 und den Schirmabschnitt 4 im Bereich eines Widerlagerelementes 7. Fig. 3 ist zu entnehmen, dass die Widerlagerelemente 7 Rastnasen 8 aufweisen, die mit einem Kontaktbereich 9 über den Randsteg 5 vorstehen und durch Vorsehen einer an drei Seiten ausgebildeten Aussparung 10 quer zu dem Randsteg 5 bewegbar sind. Weiterhin ist aus Fig. 3 ersichtlich, dass der Schirmabschnitt in Richtung des Randsteges 5 weisend abgewinkelt ist.

Gemäß Fig. 3 ist die Abdeckkappe 1 mit einem Schmelzkleber 11 ausgebildet, der auf der dem Randsteg 5 zugewandten Seite des Schirmabschnittes 4 anliegt und an diesem anhaftet. Der Schmelzkleber 11 ist bei Zimmertemperatur oder einer geringfügig höheren Temperatur im wesentlichen fest, während er nach Erwärmen auf eine Erweichungstemperatur von typischerweise etwa 100 Grad Celsius bis etwa 150 Grad Celsius oder darüber plastisch verformbar ist. Bei der Abdeckkappe 1 gemäß dem dargestellten Ausführungsbeispiel greift der Schmelzkleber 11 in einen nutartigen Übergangsabschnitt 12 ein und steht über den Außenrand des Schirmabschnittes 4 über. Der nutartige Übergangsabschnitt 12 ist zwischen dem Schirmabschnitt 4 sowie dem Nutabschnitt 3 angeordnet und nach außen geöffnet. Dabei ist zwischen dem überstehenden Teil des Schmelzklebers 11 und den Kontaktbereichen 9 der Widerlagerelemente 7 in Längsrichtung des Randsteges 5 ein Entspannungsabstand vorhanden.

Weiterhin ist der Darstellung gemäß Fig. 3 zu entnehmen, dass durch den zwischen dem Abdeckabschnitt 2 und dem Schirmabschnitt 4 ausgebildeten Nutabschnitt 3 gegenüber der Materialstärke im Übergangsbereich zwischen dem Abdeckabschnitt 2 und dem Randsteg 5 eine verringerte Materialstärke vorliegt, was zusammen mit dem in etwa parallel zu dem Randsteg 5 ausgerichteten Übergangsabschnitt 12 zu einer verringerten Biegesteifigkeit des Gelenkbereiches führt.

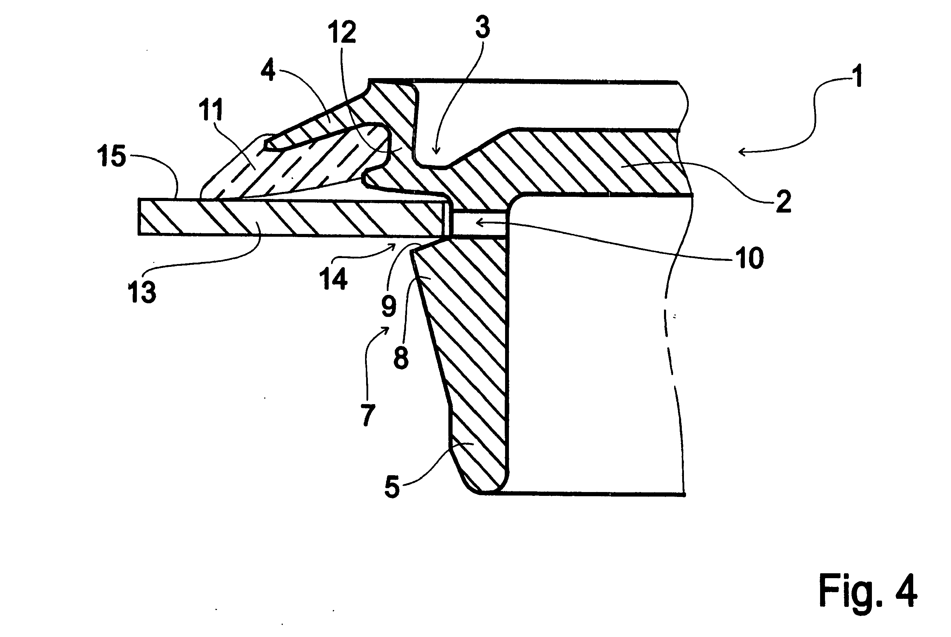

Fig. 4 zeigt die Abdeckkappe 1 gemäß Fig. 1 bis Fig. 3 in einer Fig. 3 entsprechenden Darstellung nach Einfügen in eine zu verschließende, in einem Basisteil 13 vorhandene Öffnung bei Raumtemperatur vor Erwärmen des Schmelzklebers 11, wobei von dem Basisteil 13 lediglich eine Seite des an die zu verschließende Öffnung angrenzenden Randbereiches 14 dargestellt ist. Die Dicke des Randbereiches 14 ist dabei größer als der Entspannungsabstand. Der Darstellung gemäß Fig. 4 ist zu entnehmen, dass der über den Schirmabschnitt 4 überstehende Teil des Schmelzklebers 11 an einer Auflageseite 15 des Basisteiles 13 anliegt und die Kontaktbereiche 9 der Widerlagerelemente 7 den Randbereich 14 des Basisteiles 13 hintergreifen. Dabei ist insbesondere in dem Nutabschnitt 3, aber bis zu einem gewissen Grad auch in dem Übergangsabschnitt 12 eine Vorspannung aufgebaut, da aufgrund der gegenüber dem Entspannungsabstand größeren Materialdicke im Randbereich 14 der Schirmabschnitt 4 von dem Randsteg 5 wegweisend ausweicht.

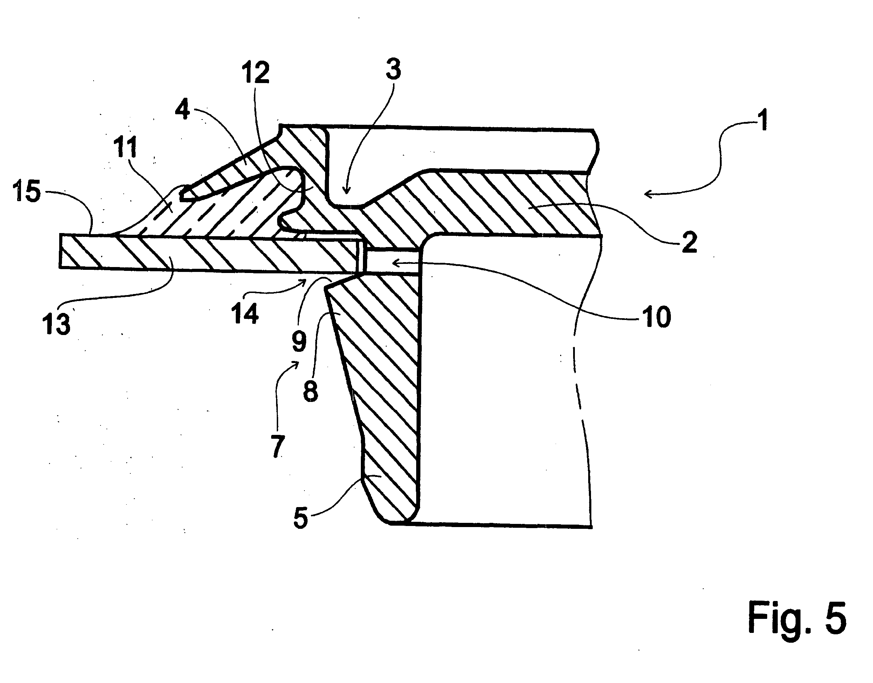

Fig. 5 zeigt die Abdeckkappe 1 gemäß Fig. 1 bis Fig. 4 in einer Fig. 4 entsprechenden Darstellung nach Erwärmen des Schmelzklebers 11 auf eine gegenüber der Raumtemperatur deutlich höherer Prozesstemperatur, die wenigstens der Erweichungstemperatur des Schmelzklebers 11 entspricht. Fig. 5 ist entnehmen, dass sich gegenüber der Anordnung gemäß Fig. 4 aufgrund der plastischen Verformbarkeit des Schmelzklebers 11 und dem damit verbundenen Abbau der Vorspannung insbesondere in dem Nutabschnitt 3 der Schirmabschnitt 4 selbsttätig sowie dabei insbesondere unabhängig von der Einbaulage der Abdeckkappe 1 der Auflageseite 15 des Basisteils 13 angenähert hat und der Schmelzkleber 11 das Volumen zwischen der dem Randsteg 5 zugewandten Seite des Schirmabschnittes 4 und der Auflageseite 15 ausfüllt, wobei durch das Einrichten der Prozesstemperatur und der Prozesszeit eine Teil des Materiales des Schmelzklebers 11 in Richtung des Randsteges 5 vorgekrochen ist. Dadurch ist ein betriebssicheres und prozesstechnisch verhältnismäßig einfach zu handhabendes, bis auf das Einfügen der Abdeckkappe 1 in die Öffnung von zusätzlichen Handhabungsmaßnahmen freies Verschließen der fraglichen Öffnung erzielt.

## Patentansprüche

1. Abdeckkappe zum Verschließen einer Öffnung in einem Basisteil (13) mit einem außenseitigen Randsteg (5), der in die Öffnung einfügbar ist, mit einem Schirmabschnitt (4), der über den Randsteg (5) übersteht, und mit einem im Bereich des Schirmabschnittes (4) angeordneten, bei Erwärmen oberhalb einer Erweichungstemperatur plastisch verformbaren Schmelzkleber (11), wobei an dem Randsteg (5) eine Widerlagerandordnung (7) ausgebildet ist, die bei Einfügen der Abdeckkappe (1) in die Öffnung das Basisteil (13) hintergreift, wobei zwischen dem Randsteg (5) und dem Schirmabschnitt (4) ein Gelenkbereich (3) mit einer gegenüber dem Schirmabschnitt (4) verringerten Biegesteifigkeit ausgebildet ist und wobei der Abstand zwischen hintergreifenden Kontaktbereichen (9) der Widerlageranordnung (7) und der dem Randsteg (5) zugewandten Unterseite des Schmelzklebers (11) kleiner als die Dicke des Basisteiles (13) im Randbereich (14) der Öffnung ist, so dass sich bei Einfügen der Abdeckkappe (1) in die Öffnung in dem Gelenkbereich (3) eine Vorspannung aufbaut, **dadurch gekennzeichnet, dass** zwischen dem Schirmabschnitt (4) und dem Gelenkbereich (3) ein mit Schmelzkleber (11) gefüllter, nutartiger Übergangsabschnitt (12) vorhanden ist, der in Richtung des Außenrandes des Schirmabschnittes (4) geöffnet ist.

2. Abdeckkappe nach Anspruch 1, **dadurch gekennzeichnet, dass** der Gelenkbereich einen Nutabschnitt (3) aufweist, dessen Materialstärke gegenüber angrenzenden innenseitigen Bereichen verringert ist.

3. Abdeckkappe nach Anspruch 2, **dadurch gekennzeichnet, dass** der Nutabschnitt (3) von dem Randsteg (5) wegweisend geöffnet ist.

4. Abdeckkappe nach einem der Ansprüche 1 bis 3, **dadurch gekennzeichnet, dass** die Widerlageranordnung (7) quer zu dem Randsteg (5) bewegbare und mit dem Randsteg (5) verbundene Rastnasen (8) aufweist.

5. Abdeckkappe nach einem der Ansprüche 1 bis 3, **dadurch gekennzeichnet, dass** die Widerlageranordnung (7) über eine Anzahl von an dem Randsteg (5) ausgebildete sägezahnartige Vorsprünge verfügt.

## Claims

1. Closure cap for closing an opening in a base part (13), comprising an outside edge web (5) which can be inserted into the opening, comprising a shielding section (4) which projects beyond the edge web (5), and comprising a hotmelt adhesive (11) which is arranged in the region of the shielding section (4) and is plastically deformable on heating above a softening temperature, an abutment arrangement (7) which engages the base part (13) when the closure cap (1) is inserted into the opening being formed on the edge web (5), a joint region (3) having a flexural rigidity which is lower than that of the shielding section (4) being formed between the edge web (5) and the shielding section (4), and the distance between engaging contact regions (9) of the abutment arrangement (7) and of the underside of the hotmelt adhesive (11) which faces the edge web (5) being smaller than the thickness of the base part (13) in the edge region (14) of the opening, so that an initial tension builds up in the joint region (3) when the closure cap (1) is inserted into the opening, **characterized in that** a groove-like transition section (12) which is filled with hotmelt adhesive (11) and is open towards the outer edge of the shielding section (4) is present between the shielding section (4) and the joint region (3).

2. Closure cap according to Claim 1, **characterized in that** the joint region has a groove section (3), the material thickness of which is smaller compared with the adjacent inside regions.

3. Closure cap according to Claim 2, **characterized in that** the groove section (3) is open in a direction pointing away from the edge web (5).

4. Closure cap according to any of Claims 1 to 3, **characterized in that** the abutment arrangement (7) has catches (8) which are movable transversely to the edge web (5) and are connected to the edge web (5).

5. Closure cap according to any of Claims 1 to 3, **characterized in that** the abutment arrangement (7) has a number of saw tooth-like projections formed on the edge web (5).

## Revendications

1. Capot de protection pour la fermeture d'une ouverture dans une partie de base (13) avec une traverse de bordure côté extérieur (5) qui peut être insérée dans l'ouverture, avec une portion d'écran (4), qui déborde au-dessus de la traverse de bordure (5) et avec une colle à fusion (11) disposée dans la zone de la portion d'écran (4), pouvant subir une déformation plastique lors du chauffage au-dessus d'une température de ramollissement, sachant qu'une disposition de butée (7) est configurée sur la traverse de bordure (5), qui accroche par derrière la partie de base (13) lors de l'insertion du capot de protection (1) dans l'ouverture, sachant qu'entre la traverse de bordure (5) et la portion d'écran (4) une zone d'articulation (3) est configurée avec une raideur à la flexion réduite par rapport à la portion d'écran et sachant que la distance entre les zones de contact (9) s'accrochant par derrière de la disposition de la butée (7) et le côté inférieur tourné vers la traverse de bordure (5) de la colle à fusion (11) est inférieure à l'épaisseur de la partie de base (13) dans la zone de bordure (14) de l'ouverture, de sorte que lors de l'insertion du capot de protection (1) dans l'ouverture une tension de polarisation se forme dans la zone d'articulation (3), **caractérisée en ce que** entre la portion d'écran (4) et la zone d'articulation (3) se trouve une portion de transition (12) en forme de rainure, remplie d'une colle à fusion (11), qui est ouverte en direction de la bordure extérieure de la portion d'écran (4).

2. Capot de protection selon la revendication 1, **caractérisé en ce que** la zone d'articulation comporte une portion de rainure (3) dont la résistance de matériau est réduite par rapport à des zones adjacentes côté interne.

3. Capot de protection selon la revendication 2, **caractérisé en ce que** la portion de rainure (3) est ouverte en s'éloignant de la traverse de bordure (5).

4. Capot de protection selon l'une des revendications 1 à 3, **caractérisé en ce que** la disposition de butée (7) comporte des nez d'encoches 8 pouvant être déplacés transversalement à la traverse de bordure (5) et reliés à la traverse de bordure (5).

5. Capot de protection selon l'une des revendications 1 à 3, **caractérisé en ce que** la disposition de butée (7) dispose d'un nombre de parties en saillie configurées en dents de scie sur la traverse de bordure (5).
